(19) Europäisches Patentamt

European Patent Office

Office européen des brevets

(11) **EP 4 604 023 A1**

(12) **EUROPEAN PATENT APPLICATION**

(43) Date of publication:
**20.08.2025 Bulletin 2025/34**

(21) Application number: **25155463.0**

(22) Date of filing: **03.02.2025**

(51) International Patent Classification (IPC):
**G06N 3/098** (2023.01)     **G06N 3/092** (2023.01)
**G06N 3/084** (2023.01)     **G06N 3/088** (2023.01)
**G06N 3/09** (2023.01)

(52) Cooperative Patent Classification (CPC):
**G06N 3/098; G06N 3/084; G06N 3/088; G06N 3/09; G06N 3/092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2024 FI 20245172**

(71) Applicant: **Nokia Solutions and Networks Oy
02610 Espoo (FI)**

(72) Inventors:
• **KROUKA, Mounssif**
  **Oulu (FI)**
• **ELBAMBY, Mohammed Saad**
  **Espoo (FI)**
• **BENNIS, Mehdi**
  **BENNIS (FI)**

(74) Representative: **Nokia EPO representatives
Nokia Technologies Oy
Karakaari 7
02610 Espoo (FI)**

(54) **COLLABORATIVE TRAINING OF A MACHINE LEARNING MODEL CONSIDERING ESTIMATED ENERGY CONSUMPTION**

(57) A method may comprise: training, by a network node, a first machine learning (ML) model for selection of training modes for collaborative training of a second ML model by a plurality of devices, wherein the first ML model is configured for selection of the training modes based on radio channel state information (CSI) of the devices and an estimate of energy consumption for training the second ML model by a respective device of the devices; transmitting the first ML model to the devices; transmitting the second ML model to the devices; receiving radio CSI from each of the devices; sharing the received radio CSI with the devices; receiving, from the devices, indications of the training modes of the devices for the collaborative training of the second ML model; and performing iterative training of the second ML model.

FIG. 10

EP 4 604 023 A1

**Description**

**TECHNICAL FIELD**

Various example embodiments generally relate to the field of wireless communication. Some example embodiments relate to collaborative training of machine learning models in a communication network.

**BACKGROUND**

Operation of wireless communication networks may be enhanced with edge computing capabilities. Edge computing may refer to shifting at least portion of computation from a centralized server closer to the point where the data is created and consumed. To implement edge computing, mobile edge computing (MEC) servers may be provided at various locations, including the premises of the customer, street cabinets, mobile towers, or network aggregation points.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to reduce energy consumption in collaborative training of machine learning models in a communication network. This and other benefits may be achieved by the features of the independent claims. Further example embodiments are provided in the dependent claims, the description, and the drawings.

According to a first aspect, a method is disclosed. The method may comprise: training, by a network node, a first machine learning model for selection of training modes for collaborative training of a second machine learning model by a plurality of devices, wherein the first machine learning model is configured for selection of the training modes based on radio channel state information of the plurality of devices and an estimate of energy consumption for training the second machine learning model by a respective device of the plurality of devices; transmitting the first machine learning model to the plurality of devices; transmitting the second machine learning model to the plurality of devices; receiving radio channel state information from each of the plurality of devices; sharing the received radio channel state information with the plurality of devices; receiving, from the plurality of devices, indications of the training modes of plurality of devices for the collaborative training of the second machine learning model; and performing iterative training of the second machine learning model, wherein iterations of the iterative training of the second machine learning model comprise: receiving, from the plurality of devices, training output data of the second machine learning model, wherein the training output data is dependent on the training modes of the plurality of devices; updating the second machine learning model based on the training output data received from the plurality of devices; and transmitting the updated second machine learning model to the plurality of devices.

According to an example embodiment of the first aspect, the training modes of the plurality of devices are indicative of respective cut-layers of the plurality of devices configured to provide the training output data of the second machine learning model.

According to an example embodiment of the first aspect, the training modes of the plurality of devices comprise one or more of the following: a split learning mode with an index of a cut-layer of the respective device, a federated learning mode with the index of the cut-layer of the respective device corresponding to a final layer of the second machine learning model, or an idle mode indicative of the respective device not participating in the collaborative training of the second machine learning model.

According to an example embodiment of the first aspect, the first machine learning model comprises a multi-agent reinforcement learning (MARL) model.

According to an example embodiment of the first aspect, the MARL model is trained based on a reward function configured to provide a reward when: a training mode is the split learning mode or the federated learning mode, the training minimizes the estimate of energy consumption for training the second machine learning model by the respective device, and the estimate of the energy consumption for training the second machine learning model by the respective device is below a threshold; and the training mode is indicative of the respective device not participating in the collaborative training of the second machine learning mode and the estimate of the energy consumption for training the second machine learning model by the respective device is above the threshold.

According to an example embodiment of the first aspect, the iterations of the iterative training of the second machine learning mode further comprise: forward propagating the training output data received from the plurality of devices through respective instances of the second machine learning model starting from layers next to cut-layers of the plurality of devices; determining gradients for updating the respective instances of the second machine learning model;

backpropagating the gradients until the layers next to the cut-layers of the plurality of devices; and transmitting gradients of the layers next to the respective cut-layers to the plurality of devices.

According to an example embodiment of the first aspect, the method further comprises: performing a machine learning task with the updated second machine learning model.

According to an example embodiment of the first aspect, the machine learning task comprises one of the following: speech processing, image classification, anomaly detection, frequency spectrum control, channel estimation, signal detection, beamforming, channel encoding, channel decoding, time-frequency transmission resource control, or multiple access control.

According to an example embodiment of the first aspect, the radio channel state information comprises signal-to-interference-plus-noise ratio data or channel quality indicator data.

According to a second aspect, a method is disclosed. The method may comprise: receiving, by a device from a network node, a first machine learning model configured for selection of a training mode for collaborative training of a second machine learning model by a plurality of devices, wherein the first machine learning model is configured for selection of the training mode based on radio channel state information of the plurality of devices and an estimate of energy consumption for training the second machine learning model by the device; receiving, from the network node, the second machine learning model; receiving, from the network node, the radio channel state information of the plurality of devices; selecting, by the first machine learning model, the training mode for training the second machine learning model by the device; and transmitting, to the network node, an indication of the training mode for training the second machine learning model by the device.

According to an example embodiment of the second aspect, the method comprises: performing iterative training of the second machine learning model using the training mode, wherein iterations of the iterative training of the second machine learning model comprise: transmitting, to the network node, training output data of the second machine learning model, wherein the training output data is dependent on the training mode; and receiving, from the network node, an updated second machine learning model.

According to an example embodiment of the second aspect, the training mode is indicative of a cut-layer configured to provide the training output data of the second machine learning model.

According to an example embodiment of the second aspect, the training mode comprises one of the following: a split learning mode with an index of the cut-layer, a federated learning mode with the index of the cut-layer corresponding to a final layer of the second machine learning model, or an idle mode indicative of the device not participating in the collaborative training of the second machine learning model.

According to an example embodiment of the second aspect, the first machine learning model comprises a multi-agent reinforcement learning (MARL) model.

According to an example embodiment of the second aspect, the iterations of the iterative training of the second machine learning mode further comprise: forward propagating training data through the second machine learning model until the cut-layer to obtain the training output data; receiving gradients of a layer next to the cut-layer for updating the second machine learning model; and backpropagating the gradients through the second machine learning model starting from the cut-layer.

According to an example embodiment of the second aspect, the method comprises: determining the estimate of the energy consumption for training the second machine learning model by the device based on: a number of parameters of the second machine learning model, a number of computational operations for forward propagation and backpropagation of the second machine learning model, and a number of time-frequency transmission resources for transmitting the training output data to the network node and receiving the gradients for updating the second machine learning model.

According to an example embodiment of the second aspect, the method comprises: performing a machine learning task with the updated second machine learning model.

According to an example embodiment of the second aspect, the machine learning task comprises one or the following: speech processing, image classification, anomaly detection, frequency spectrum control, channel estimation, signal detection, beamforming, channel encoding, channel decoding, time-frequency transmission resource control, or multiple access control.

According to an example embodiment of the second aspect, the radio channel state information comprises signal-to-interference-plus-noise ratio data or channel quality indicator data.

According to a third aspect, a network node is disclosed. The network node may comprise: at least one processor; and at least one memory storing instructions that, when executed by the at least one processor, cause the network node at least to: train a first machine learning model for selection of training modes for collaborative training of a second machine learning model by a plurality of devices, wherein the first machine learning model is configured for selection of the training modes based on radio channel state information of the plurality of devices and an estimate of energy consumption for training the second machine learning model by a respective device of the plurality of devices; transmit the first machine learning model to the plurality of devices; transmit the second machine learning model to the plurality of devices; receive radio channel state information from each of the plurality of devices; share the received radio channel state information with the plurality of devices; receive, from the plurality of devices, indications of the training modes of plurality of devices for the collaborative training of the second machine learning model; and perform iterative training of the second machine learning model, wherein at iterations of the iterative training of the second machine learning the instructions are configured to, when executed by the at least one processor, cause the network node to: receive, from the plurality of devices, training output data of the second machine learning model, wherein the training output data is dependent on the training modes of the plurality of devices; update the second machine learning model based on the training output data received from the plurality of devices; and transmit the updated second machine learning model to the plurality of devices.

According to an example embodiment of the third aspect, the training modes of the plurality of devices are indicative of respective cut-layers of the plurality of devices configured to provide the training output data of the second machine learning model.

According to an example embodiment of the third aspect, the training modes of the plurality of devices comprise one or more of the following: a split learning mode with an index of a cut-layer of the respective device, a federated learning mode with the index of the cut-layer of the respective device corresponding to a final layer of the second machine learning model, or an idle mode indicative of the respective device not participating in the collaborative training of the second machine learning model.

According to an example embodiment of the third aspect, the first machine learning model comprises a multi-agent reinforcement learning (MARL) model.

According to an example embodiment of the third aspect, the instructions are configured to, when executed by the at least one processor, cause the network node to: train the MARL model based on a reward function configured to provide a reward when: a training mode is the split learning mode or the federated learning mode, the training minimizes the estimate of energy consumption for training the second machine learning model by the respective device, and the estimate of the energy consumption for training the second machine learning model by the respective device is below a threshold; and the training mode is indicative of the respective device not participating in the collaborative training of the second machine learning mode and the estimate of the energy consumption for training the second machine learning model by the respective device is above the threshold.

According to an example embodiment of the third aspect, wherein at the iterations of the iterative training of the second machine learning the instructions are configured to, when executed by the at least one processor, cause the network node to: forward propagate the training output data received from the plurality of devices through respective instances of the second machine learning model starting from layers next to cut-layers of the plurality of devices; determine gradients for updating the respective instances of the second machine learning model; backpropagate the gradients until the layers next to the cut-layers of the plurality of devices; and transmit gradients of the layers next to the respective cut-layers to the plurality of devices.

According to an example embodiment of the third aspect, the instructions are configured to, when executed by the at least one processor, cause the network node to: perform a machine learning task with the updated second machine learning model.

According to an example embodiment of the third aspect, the machine learning task comprises one of the following: speech processing, image classification, anomaly detection, frequency spectrum control, channel estimation, signal detection, beamforming, channel encoding, channel decoding, time-frequency transmission resource control, or multiple access control.

According to an example embodiment of the third aspect, the radio channel state information comprises signal-to-interference-plus-noise ratio data or channel quality indicator data.

According to a fourth aspect, a device is disclosed. The device may comprise: at least one processor; and at least one memory storing instructions that, when executed by the at least one processor, cause the device at least to: receive, from a network node, a first machine learning model configured for selection of a training mode for collaborative training of a second machine learning model by a plurality of devices, wherein the first machine learning model is configured for selection of the training mode based on radio channel state information of the plurality of devices and an estimate of energy consumption for training the second machine learning model by the device; receive, from the network node, the second machine learning model; receive, from the network node, the radio channel state information of the plurality of devices; select, by the first machine learning model, the training mode for training the second machine learning model by the device; and transmit, to the network node, an indication of the training mode for training the second machine learning model by the device.

According to an example embodiment of the fourth aspect, the instructions are configured to, when executed by the at least one processor, cause the device to: perform iterative training of the second machine learning model using the training mode, wherein at iterations of the iterative training of the second machine learning instructions are configured to, when executed by the at least one processor, cause the device to: transmit, to the network node, training output data of the second machine learning model, wherein the training output data is dependent on the training mode; and receive, from the network node, an updated second machine learning model.

According to an example embodiment of the fourth aspect, the training mode is indicative of a cut-layer configured to provide the training output data of the second machine learning model.

According to an example embodiment of the fourth aspect, the training mode comprises one of the following: a split learning mode with an index of the cut-layer, a federated learning mode with the index of the cut-layer corresponding to a final layer of the second machine learning model, or an idle mode indicative of the device not participating in the collaborative training of the second machine learning model.

According to an example embodiment of the fourth aspect, the first machine learning model comprises a multi-agent reinforcement learning (MARL) model.

According to an example embodiment of the fourth aspect, at the iterations of the iterative training of the second machine learning mode the instructions are configured to, when executed by the at least one processor, cause the device to: forward propagate training data through the second machine learning model until the cut-layer to obtain the training output data; receive gradients of a layer next to the cut-layer for updating the second machine learning model; and backpropagate the gradients through the second machine learning model starting from the cut-layer.

According to an example embodiment of the fourth aspect, the instructions are configured to, when executed by the at least one processor, cause the device to: determine the estimate of the energy consumption for training the second machine learning model by the device based on: a number of parameters of the second machine learning model, a number of computational operations for forward propagation and backpropagation of the second machine learning model, and a number of time-frequency transmission resources for transmitting the training output data to the network node and receiving the gradients for updating the second machine learning model.

According to an example embodiment of the fourth aspect, the instructions are configured to, when executed by the at least one processor, cause the device to: perform a machine learning task with the updated second machine learning model.

According to an example embodiment of the fourth aspect, the machine learning task comprises one or the following: speech processing, image classification, anomaly detection, frequency spectrum control, channel estimation, signal detection, beamforming, channel encoding, channel decoding, time-frequency transmission resource control, or multiple access control.

According to an example embodiment of the fourth aspect, the radio channel state information comprises signal-to-interference-plus-noise ratio data or channel quality indicator data.

According to a fifth aspect, a network node is disclosed. The network node may comprise: means for training a first machine learning model for selection of training modes for collaborative training of a second machine learning model by a plurality of devices, wherein the first machine learning model is configured for selection of the training modes based on radio channel state information of the plurality of devices and an estimate of energy consumption for training the second machine learning model by a respective device of the plurality of devices; means for transmitting the first machine learning model to the plurality of devices; means for transmitting the second machine learning model to the plurality of devices; means for receiving radio channel state information from each of the plurality of devices; means for sharing the received radio channel state information with the plurality of devices; means for receiving, from the plurality of devices, indications of the training modes of plurality of devices for the collaborative training of the second machine learning model; and means for performing iterative training of the second machine learning model, wherein iterations of the iterative training of the second machine learning comprise: receiving, from the plurality of devices, training output data of the second machine learning model, wherein the training output data is dependent on the training modes of the plurality of devices; updating the second machine learning model based on the training output data received from the plurality of devices; and transmitting the updated second machine learning model to the plurality of devices. The network mode may comprise means for performing any example embodiment of the method of the first aspect.

According to a sixth aspect, a device is disclosed. The device may comprise: means for receiving, from a network node, a first machine learning model configured for selection of a training mode for collaborative training of a second machine learning model by a plurality of devices, wherein the first machine learning model is configured for selection of the training mode based on radio channel state information of the plurality of devices and an estimate of energy consumption for training the second machine learning model by the device; means for receiving, from the network node, the second machine learning model; means for receiving, from the network node, the radio channel state information of the plurality of devices; means for selecting, by the first machine learning model, the training mode for training the second machine learning model by the device; and means for transmitting, to the network node, an indication of the training mode for training the second machine learning model by the device. The device may comprise means for performing any example embodiment of the method of the second aspect.

According to a seventh aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the first or second aspect, or any example embodiment(s) thereof.

Example embodiments of the present disclosure can thus provide apparatuses, methods, computer programs, computer program products, or computer readable media for improving various aspects of wireless tethering. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example of a communication network;
FIG. 2 illustrates an example of an apparatus configured to practice one or more example embodiments;
FIG. 3 illustrates an example of a machine learning model;
FIG. 4 illustrates an example of a node of a neural network;
FIG. 5 illustrates an example of an efficient hybrid split federated learning (EHSFL) architecture for training a machine learning model;
FIG. 6 illustrates an example of signalling and operations for collaborative training of a machine learning model;
FIG. 7 illustrates an example of total energy consumption for different training architectures;
FIG. 8 illustrates examples of relative energy savings provided by EHFSL;
FIG. 9 illustrates an example of device participation rates for different training architectures;
FIG. 10 illustrates an example of a method for collaborative training of a machine learning model; and
FIG. 11 illustrates an example of another method for collaborative training of a machine learning model.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Artificial Intelligence (AI) has made significant breakthroughs in various fields such as speech processing, image classification, and anomaly detection, due to the growth in data and advancements in machine learning (ML) algorithms and computing resources. However, the increasing amount of data generated by end devices such as smartphones and internet of things (IoT) sensors presents both opportunities and challenges for providing intelligent services. Some challenges with server-based centralized ML solutions include vulnerability of shared raw data and its privacy, high amount of communication resources needed for transferring the needed data, and transmission latency between the source (e.g., edge device such as a smartphone) and the central server.

Edge AI provides a promising solution due to the rapid development of mobile edge computing (MEC) capabilities that enable to provide cloud-computing capabilities at the edge of a mobile network, making the application of ML models at the edge more efficient. Additionally, the computational capabilities of edge devices continue to improve, for example with the deployment of neural processing units in smartphones and other edge nodes.

Federated learning (FL) may be used to enable distributed learning at the network edge and to provide a privacy-preserving and communication-efficient learning solution. In case of federated learning, multiple devices may be configured to locally train the ML model and exchange it with an edge server, which may be configured to aggregate the received ML models and transmit an updated version of the ML model back to the devices. This provides the benefit of enabling to keep the raw data private at the edge server, while merely processing and sharing the ML model with the devices. Pushing AI towards the edge is however not a trivial task. The approach of deploying full ML models on edge devices may not be feasible, for example due to limited energy budget at the edge devices. It may be therefore challenging to develop solutions for locally training large ML models comprising for example millions of ML model parameters.

In split-federated learning (SFL), edge devices may be configured to process a fraction of the ML model and transmit data of the output layer (e.g., cut-layer) to a centralized server (CS), which may be configured to continue the learning process. This technique enables devices with limited energy budgets to participate in the training, thereby improving accuracy and speed of the training process. To account for the relatively high communication overhead of split learning when datasets are large, a hybrid SFL (HSFL) approach may be used to leverage the parallel model training mechanism of federated learning and the ML model splitting framework of split learning (SL). In case of HSFL, the federated learning may include some devices performing split training and some device performing (non-split) federated learning.

Nonetheless, the cut-layer may need to be transmitted by the centralized server for devices that choose to split the ML model. This may result in different energy budgets for different devices, for example depending on their local signal-to-interference-plus-noise ratio (SINR), or radio channel conditions in general. For this reason, it may be desired to enable collaboration between devices, in order to learn to make optimal mode-selection decisions locally, e.g., whether to perform split learning with a particular index of the cut-layer, federated learning, or no learning (idle)locally. This enables to reduce the overall energy consumption, while increasing the number of devices capable of participating in the collaborative training, resulting in higher accuracy and better energy efficiency. This device-specific optimization of training mode may be implemented for example based on distributed reinforcement learning (RL) techniques, as will be further described below.

Reinforcement learning may be applied in solving decision-making problems. RL may include the following components: *state, action,* and *reward.* Given the *state,* the RL agent is trained to choose the *action* that maximizes a discounted *reward.* When multiple agents coexist in the same environment, the setting may be called multi-agent reinforcement learning (MARL). In this case the agents aim to learn optimal policies simultaneously. In a collaborative setting, RL agents may interact with the environment and aim to find the best trajectory of actions (e.g., policies) that lead to maximum total average reward, based on the rewards/costs fed-back from the environment.

Owing to advancements in wireless communication technology, the number of connected devices is hugely increasing. This may lead to abundance of data that is to be shared across the network. This also opens the door to a wide range of data-hungry AI applications and solutions. In case of centralized AI, where devices are configured to send their raw data to the centralized server (CS) for training, it may not be possible provide sufficient data privacy and communication efficiency. Federated learning enables devices to keep their data locally, update a local ML model, and share the ML model to the centralized server. Nonetheless, devices with limited energy budgets might be left out of the learning process, for example when the ML model contains a huge number of parameters.

Split learning (SL) provides both computationally and communication-wise efficient solution, where the devices process a fraction of the ML model and transmit the output of the partitioning layer (e.g., cut-layer) to the centralized server at every communication round. However, applying split training sequentially for each device may incur excessive training latency. Parallelizing split learning, either by split federated learning (SFL) or parallel split learning (PSL) enables to reduce the training latency. SFL enables the devices to update the server's model partition in parallel and to perform synchronization to their local model partitions.

In PSL the devices may not communicate with the centralized server, thereby resulting in varied local model parameters. The PSL approach may be improved in terms of latency by configuring the server side to aggregate some activation gradients. This reduces the transmission time, in addition to enabling optimized subchannel allocation and cut-layer selection. To enable a mixed FL and SL architecture, a hybrid SFL (HSFL) scheme may be used to configure the centralized server to support both FL mode (e.g., local processing of the model) and SL mode (e.g., devices using a broadcasted cut-layer index to process the local model partition).

In general, such approaches may consider the cut-layer selection to be common for the whole range of devices participating in the collaborative training. This may not be however optimal, for example because the devices may have different SINR levels with respect to the centralized server. Hence, it is possible that selecting a certain cut-layer results in the minimum energy consumption for one device, but not for the other devices participating in the training. In this regard, example embodiments of the present disclosure provide methods for optimizing the cut-layer index selection in SL mode for every device in a collaborative approach. The disclosed training architectures enable to reduce the total energy consumption of the devices, while enabling devices with limited energy budgets to participate in the training process.

In case of federated learning methods the raw data may be kept at the devices and local copies of the ML model may be transmitted to the centralized server (CS), in order to enable privacy preserving and communication-efficient learning for edge devices. The centralized server may be configured to aggregate the local models and update a common ML model, also referred to as a global model. The common ML model may be then transmitted (e.g., broadcasted) to the devices for the next learning round.

The total energy consumption, *E,* at each device may be characterized by the following equation:

$$E = E_m + E_c + E_t, \qquad\qquad (1)$$

where $E_m$, $E_c$, and $E_t$ indicate the energy consumption components for memory access, computation, and transmission, respectively. For devices with limited energy budgets, locally processing and transmitting the ML model may be infeasible, for example in case of a large ML model with huge number of parameters. Hence, to enable these devices to participate in the learning process, SL may be leveraged such that the ML model is partitioned into two parts: i) a first part of the ML model configured to be locally processed at the device, followed by transmission of the output of the cut-layer to the centralized server, and ii) a second part located at the centralized server, which is configured to continue that training of the ML model from the cut-layer to the last layer.

It is observed from Equation (1) that the selected cut-layer index affects the processing energy (e.g., memory access and computation). Moreover, although the devices may share the same ML model architecture, the energy consumption may be different even for devices that selecting the same cut-layer index. The reason for this is that the transmission energy $E_t$ depends on the output size of the cut-layer, as well as the radio channel conditions of the devices. Minimizing the total energy consumption over multiple devices may be performed for example based on considering their SINR levels as local information. However, local SINR may not be sufficient for capturing the amount of allocated bandwidth resources for each device. Collaboration among devices may be therefore applied to reduce the overall energy consumption of the devices. This also provides the benefit of enabling to increase the number of participants in the learning process.

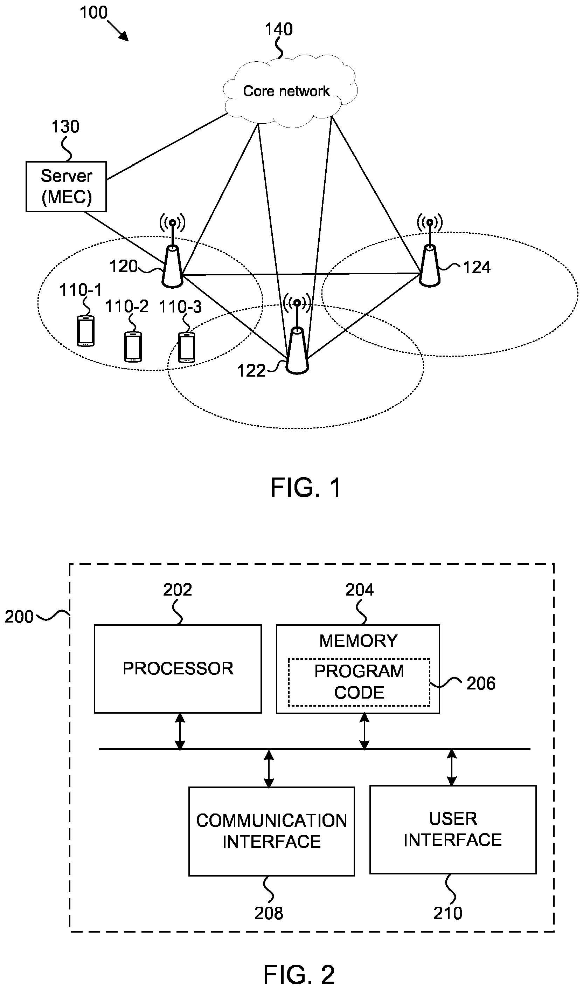

FIG. 1 illustrates an example of a communication network. Communication network 100 may comprise one or more access nodes 120, 122, 124. Access node(s) 120, 122, 124 may be part of a radio access network (RAN) configured to enable devices 110-1, 110-2, 110-3, collectively referred to as devices 110, to access communication services provided by core network 140.

Communication network 100 may comprise one or more edge servers enabling to bring processing and storage of data closer to data sources, for example devices 110. An example of an edge server is server 130, which may be for example configured as a mobile edge computing (MEC) or multi-access edge computing (MEC) server. Even though illustrated as an entity separate from access node 120, it is noted that server 130 may be located at any suitable location within communication network. An edge server may be however located closer to the respective access node than other cloud computing server of the network. Server 130 may be also co-located or integrated with access node 120.

In connection with communication network 100, access node(s) 120, 122, 124, server 130, and core network 140 may be collectively referred to as the 'network'. Devices 110 may be referred to as user equipment (UE), user devices, terminal apparatuses, terminal devices, mobile devices, edge devices, or the like. Devices 110 may be configured to communicate with access node(s) 120, 122, 124 over a radio interface, which may be also referred to as an air interface. Access nodes 120, 122, 124 may be also referred to as network devices. A terminal device may comprise a device to which a connection from a communication network is terminated.

The radio interface may be configured for example based on the 5G NR (New Radio) standard defined by the 3rd Generation Partnership Project (3GPP), or any future standard or technology (e.g., 6G). Access nodes 120, 122, 124 may for example comprise 5th generation access nodes (gNB). Transmission by an access node to devices 110 may be called downlink (DL) transmission. Transmission by devices 110 to an access node may be called uplink (UL) transmission. Devices 110 may be therefore configured to operate as transmitters for uplink transmissions and as receivers for downlink transmissions. Access nodes 120, 122, 124 may be configured to operate as receivers for uplink transmissions and as transmitters for downlink transmissions. Communication network 100 may comprise a wireless communication network or a mobile communication network, such as for example a cellular communication network. Devices 110 may be configured to communicate with access node(s) 120, 122, 124 using one or more logical channels and/or physical channels, for example a control channel such as the physical downlink control channel (PDCCH) or data channels such as the physical downlink shared channel (PDSCH) or the physical uplink shared channel (PUSCH). Shared data channels, e.g., PDSCH and PUSCH, may be shared by multiple UEs. An access node may be also referred to as an access point or a base station.

Core network 140 may be implemented with various network functions (NF), including, for example, one or more user plane functions (UPF) and one or more access and mobility management functions (AMF). A UPF may be configured to handle user data part of a communication session. A UPF may thus provide an interconnect point between the radio access network and a data network configured to provide application services to devices 110 via core network 140 and the radio access network. For example, a UPF may be configured to handle encapsulation and decapsulation of user plane protocol(s), such as the GPRS (general packet radio service) tunnelling protocol for the user plane (GTP-U). An AMF may be configured to receive connection and session request related data from devices 110 (via an access node). An AMF may be configured to control connection and mobility management in communication network 100. An access node 120, 122, 124 may be configured to communicate with devices via one or more cells, illustrated by the dotted circles. A cell may be configured to serve devices at a certain geographical area at a certain radio frequency, or a range of radio frequencies around a centre frequency of the cell.

Communication network 100 may comprise other network function(s), network device(s), or protocol(s), in addition, or alternative to, those illustrated in FIG. 1. A network device may be configured to implement functionality of one or more network functions. Even though some embodiments have been described in the context of 5G, it is appreciated that embodiments of the present disclosure are not limited to this example network. Example embodiments may be therefore applied in any present or future communication networks.

FIG. 2 illustrates an example of an apparatus configured to practice one or more example embodiments. Apparatus 200 may be or comprise any of devices 110 or access nodes 120, 122, 124, server 130, an access point, a base station, a radio network node, or a split portion thereof (e.g., a central or distributed unit of an access node), an edge server, a network device, a terminal device, or in general any apparatus configured to implement functionality described herein. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code 206 or the like, for example operating system software and application software. Memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 200 may further comprise a communication interface 208 configured to enable apparatus 200 to transmit and/or receive information. Communication interface 208 may comprise an external communication interface, such as for example a radio interface between devices 110 and access node(s) 120, 122, 124, or a communication interface the radio access network and server 130 or core network 140. Communication interface 208 may comprise one or more radio transmitters or receivers, which may be coupled to one or more antennas or apparatus 200, or be configured to be coupled to one or more antennas external to apparatus 200.

Apparatus 200 may further comprise other components and/or functions such as user interface 210 comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause apparatus 200 to perform the method(s). In general, computer program instructions may be executed on means providing generic processing functions. Such means may be embedded for example in a personal computer, a smart phone, a network device, or the like. The method(s) may be thus computer-implemented, for example based algorithm(s) executable by the generic processing functions, an example of which is the at least one processor 202. The means may comprise transmission or reception means, for example one or more radio transmitters or receivers, which may be coupled to, or be configured to be coupled to, one or more antennas. Although apparatus 200 is illustrated as a single device, it is appreciated that, wherever applicable, functions of apparatus 200 may be distributed to a plurality of devices.

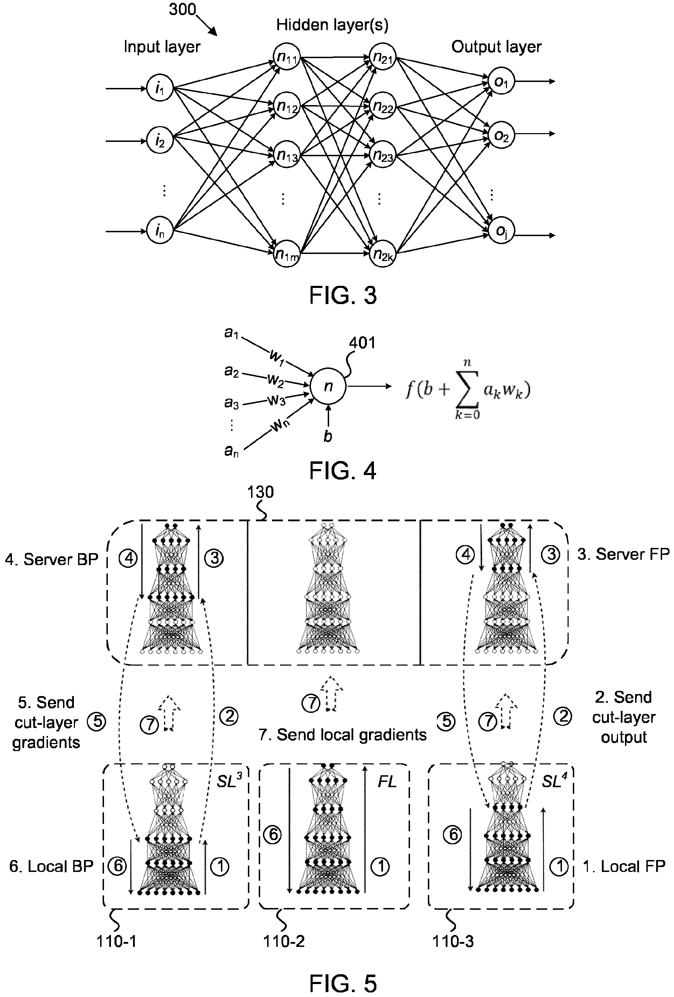

FIG. 3 illustrates an example of a neural network, which is provided as an example of a ML model. Neural network 300 may be configured to perform a particular task, for example speech recognition, image classification, anomaly detection, or the like. Neural network 300 may comprise an input layer, one or more hidden layers, and an output layer. Nodes of the input layer, $i_l$ to $i_n$, may be connected to one or more of the $m$ nodes of the first hidden layer, $n_{11}$ to $n_{1m}$ Nodes of the first hidden layer may be connected to one or more of the k nodes of the second hidden layer, $n_{21}$ to $n_{2k}$. It is appreciated that even though the example neural network of FIG. 3 illustrates two hidden layers, a neural network may apply any number and any type of hidden layers. Neural network 300 may further comprise an output layer. Nodes of the last hidden layer, in the example of FIG. 3 the nodes of second hidden layer, may be connected to one or more nodes of the output layer, $o_1$ to $o_j$. It is noted that the number of nodes may be different for each layer of the network. A node may be also referred to as a neuron, a computation unit, or an elementary computation unit. Terms neural network and model may be used interchangeably, and neural network 300 is provided as an example of an ML model. Weights of neural network 300 may be referred to as learnable parameters, trainable parameters, or simply as parameters. In the example of FIG. 3, one or more of the layers may be fully connected layers, for example layers where each node is connected to every node of a previous layer. Alternatively, or additionally neural network 300 may comprise other types of layers such as for example convolutional layer(s) or pooling layer(s).

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers. In recurrent neural networks there is a feedback loop from one or more nodes of one or more previous layers. This causes the network to become stateful. For example, the network may be able to memorize information or a state.

FIG. 4 illustrates an example of a node of a neural network. Node 401 may be configured to receive one or more inputs, $a_1$ to $a_n$, from one or more nodes of one or more previous layers and compute an output based on the input values received. Node 401 may be also configured to receive feedback from one or more nodes of one or more subsequent layers. Inputs may be associated with parameters to adjust the influence of a particular input to the output. For example weights $w_1$ to $w_n$ associated with the inputs $a_1$ to $a_n$ may be used to multiply the input values $a_1$ to $a_n$. Node 401 may be further configured combine the inputs to an output, or an activation. For example, node 401 may be configured to sum the modified input values. A bias or offset $b$ may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function $f()$ may be applied to control when and how node 401 provides the output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may comprise feeding a set of input data through the layers of neural network 300 and producing an output. During this process, the weights and biases of the neural network 400 affect the activations of individual nodes and thereby the output provided by the output layer.

One property of neural networks is that they are able to learn properties from input data, for example in supervised way or in unsupervised way. In general, a training algorithm may include changing some properties of a neural network such that its output becomes as close as possible to a desired output. Training may be performed based on minimizing or decreasing the output's error, also referred to as the loss.

During training, the output generated by the neural network may be compared to a desired output, for example ground-truth data provided for training purposes, to compute an error value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer may be then updated based on the gradients such that the loss is iteratively decreased. Examples of losses include mean squared error, cross-entropy, or the like. In deep learning, training may comprise an iterative process, where at each iteration the algorithm modifies parameters of the neural network to make a gradual improvement of the network's output, that is, to gradually decrease the loss. Training phase of the neural network may be ended after reaching an acceptable error level. In inference phase, the trained neural network may be applied for a particular task.

FIG. 5 illustrates an example of an efficient hybrid split federated learning (EHSFL) architecture for training a machine learning model. Example embodiments of the present disclosure provide an algorithm designed for resource-constrained edge devices for reducing the energy consumption during distributed machine learning. As one example, multi-agent reinforcement (MARL) may be applied to enable the energy-efficient hybrid split federated learning architecture illustrated in FIG. 5. The overall functionality may be described as follows.

A network node such as access node 120 or server 130 may train a first ML model (e.g., a MARL model) for selection of training modes for collaborative training of a second ML model (e.g., a common model or a global model) by devices 110. An individual device 110-1, 110-2, 110-3 may use the first ML model to select its training mode for the collaborative training of the second ML model. The training mode may be therefore different for devices 110-1, 110-2, 110-3, which enables to improve overall energy efficiency of the collaborative training procedure.

The first ML model may be configured for selection of the training modes based on radio channel state information (e.g., SINR or channel quality indicator, CQI, values) of devices 110 and an estimate of energy consumption for training the second ML model by a respective device 110-1, 110-2, 110-3. The energy consumption of individual devices 110-1, 110-2, 110-3 may be therefore taken into account when determining the training modes for devices 110. A CQI value provides information about the highest suitable modulation and coding scheme (MCS) and the code rate suitable for achieving a required block error rate (BLER). The CQI value for every device may be obtained with an SINR lookup table. Once devices 110 receive the CQI values of other devices, they can determine the SINR values based on the look-up table. Both SINR and CQI may be therefore used as parameters indicative of radio channel state of a device.

In the example of the MARL framework, a MARL model may be trained at a first stage for mode-selection for a subsequent learning stage with focus on energy efficiency. The resulting mode-selection model may be also referred to as an offline-trained policy model (OTPM). The OTPM model may be trained at the network, for example by a network node such as access node 120 or server 130. Even though the OTMP model has been described using the example of the MARL model, the OTMP model may be in general trained based on any suitable machine learning architecture.

The MARL algorithm may be configured to take as input the ML model architecture to be used in the distributed learning (e.g., number of layers, parameters, or activation functions), and characteristics of devices 110 (e.g., central processing unit (CPU) frequency, floating point operations per second (flops) per cycle). The MARL algorithm may be trained offline, which means that once the MARL policies have been trained, they may be saved and subsequently applied to training of distributed learning tasks. This feature provides the benefit of enhancing flexibility and efficiency in deployment of AI models, because mode-selection policies can be pre-trained and readily utilized when needed. To accurately quantify computational usage, flops may be used as a metric. Flops serves as a standardized measure which is hardware-agnostic, thereby ensuring consistent and reliable assessments of computational requirements. The MARL algorithm may be reused across various datasets, for example for training or fine-tuning. This feature provides the benefit of maximizing the utility of the MARL algorithm in a multitude of data-driven scenarios. Another benefit of the EHSFL architecture is versatility, as it can be effectively used across various federated learning use cases, expanding its applicability to scenarios such as collaborative learning in healthcare, edge computing, or the like. This adaptability simplifies the use of the EHSFL architecture into diverse applications, making it a valuable asset for the future of distributed machine learning.

The MARL model may be therefore trained based on training input data such as SINR or CQI values of devices 110, model architecture (e.g., number of layers, parameters, or activation functions) to be trained, or device parameter(s), e.g., CPU frequency or flops-per-cycle, which may be used to calculate an estimate of energy consumption for training the second ML model.

For each individual device 110-1, 110-2, 110-3, the *state* of MARL training may comprise a previous energy consumption value and the channel state information (CSI) values of devices 110 (e.g., SINR or CQI), which may affect the mode selection and hence the energy consumption at every communication round. The previous energy consumption value may be associated with a previous communication round. In general, any suitable measure indicative of radio channel conditions may be used instead of SINR or CQI values.

For example, the MARL framework for device $n$ configured to train a second ML model with $L$ layers may be characterized as follows:

-     *State:* SINR or CQI values of devices 110 and the previous energy consumption value $E$ of device $n$.
-     *Action:* Mode selection (e.g., split learning with cut-layer index $i < L$ ($SL^i$), federated learning with $i = -1$, or idle mode (which may be indicated with index $i = 0$)).
-     *Reward:* After mode selection, access node 120 may allocate time-frequency transmission resources to devices 110. Based on the selected mode, the reward R may be calculated for example as follows:

$$R = \begin{cases} 1, & if\ [i < L \ \wedge E(i) = \min\{E\} < E_{\max} \vee [i = 0 \ \wedge E(a) > E_{\max}, \forall a \in A \\ 0, otherwise \end{cases}$$

In other words, a reward (e.g., $R = 1$) may be provided if the SL mode is selected with cut-layer index i that results in the minimum estimated energy consumption for a device among the selectable cut-layer indices and the energy consumption is below a threshold $E_{\max}$ (e.g., maximum allowed energy consumption). A reward may be also provided if the estimated energy consumption the device is above the threshold for SL or FL modes, and the idle mode is selected. No reward (e.g., $R = 0$, cf. a penalty) may be provided otherwise.

The MARL model may be therefore trained based on a reward function configured to provide a reward when: a training mode (e.g., as selected by the MARL model) is the SL or FL mode, the training minimizes the estimate of energy consumption for training the ML model by a respective device, and the estimate of the energy consumption is below the threshold. Furthermore, the reward function may be configured to provide a reward when the selected training mode is indicative of the respective device not participating in the collaborative training of the ML model (e.g., idle mode has been selected) and the estimate of the energy consumption is above the threshold. This provides the benefit of training the MARL model to consider energy efficiency when selecting the training mode for training the ML model by a particular device. Energy efficiency of the collaborative training procedure may be therefore improved.

At a second stage, the first ML model (e.g., MARL model or OTPM model) may be loaded to devices 110 to enable operation of the EHSFL architecture. Devices 110 may be configured to use the first ML model, collective radio channel state information (e.g., SINR or CQI values of devices 110), and previous energy consumption values for selecting a suitable mode for participating in collaborative training of the second ML model. For example, devices 110 may be configured to select the mode from a set of modes comprising one or more of the following: split learning with cut-layer index $i$ (SL$^i$), federated learning with the index of the cut-layer corresponding to the final layer of the second ML model, or an idle mode indicative of the respective device 110-1, 110-2, 110-3 not participating in the collaborative training of the second ML model. The training modes of devices 110 may be therefore indicative of respective cut-layers devices 110 configured to provide the training output data of the second ML model. Devices 110 may then perform parallel training of the second ML model, fostering collaborative learning among devices 110. Different devices 110-1, 110-2, 110-3 may apply the different cut-layer indices $i$, when participating in the collaborative training of the second ML model.

Operations of the second stage of the EHSFL architecture are illustrated in FIG. 5, where each of devices 110 has a local copy of at least a portion of a common (second) ML model maintained at server 130. Devices 110 may be configured to select their individual training mode based on applying the first ML model received from server 130, using as input for example current estimated SINR values of devices 110 and energy consumption of a previous iteration. In this example, device 110-1 has selected SL$^3$ mode, indicating that the third layer is the cut-layer for device 110-1. Device 110-2 has selected FL-mode, indicating that it processes the entire ML model until the final layer. Device 110-3 has selected SL$^4$ mode, indicating that the fourth layer is the cut-layer for device 110-3. Server 130 may maintain a local copy of the ML model for each of devices 110. Each of devices 110-1, 110-2, 110-3 may therefore have a respective instance of at least a portion of the second ML model. Server 130 may have respective instances of the second ML model corresponding to the instances of devices 110. A general overview of the training process is provided by referring to following Steps 1 to 7:

At Step 1, devices 110 may perform forward propagation (FP) up to the cut-layer. In case of device 110-2 (FL mode) the cut-layer is the final layer of the second ML model.

At Step 2, devices 110 may transmit their outputs, that is, the outputs of the respective cut-layers, to server 130. Optionally, labels associated with the outputs may be also transmitted. Labels may be used in case of supervised learning for a classification task, where the data samples may be associated with labels. In the case of the FL mode, server 130 may not need the labels as devices 110 may compute the loss function locally. However, in the SL mode, server 130 may use the labels received from devices 110 to compute the loss function. Labels may be for example integer numbers. In general, receiving labels associated with the training data (e.g., outputs of the cut-layers) enable the second ML model to be trained for classification of data according to their labels.

At Step 3, server 130 may continue the forward propagation with ML model instances associated with devices 110-1 and 110-3, starting from the layers next to the cut-layer with the corresponding outputs received from devices 110-1 and 110-3. A layer next to the cut-layer may be the next layer that is subsequent to the cut-layer in the direction of forward propagation.

At Step 4, server 130 may perform backpropagation (BP) with the ML model instances associated with devices 110-1 and 110-3 until the respective cut-layers.

At Step 5, server 130 may send gradients of the cut-layers to devices 110-1 and 110-3.

At Step 6, devices 110-1 and 110-3 may continue the backpropagation for the remaining layers with their local instances of the second ML model, starting from the respective cut-layer. Device 110-2 may perform local backpropagation for the entire ML model.

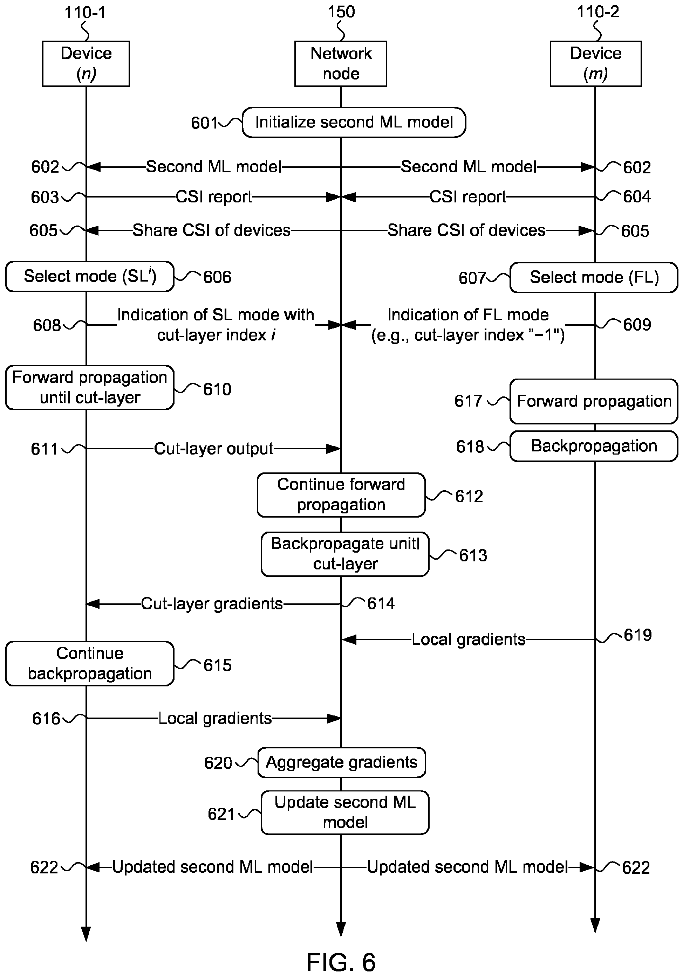

At Step 7, devices 110 may transmit their locally computed gradients (e.g., up to their corresponding cut-layer) to server 130. Server 130 may aggregate (e.g., average) the local gradients along with gradients computed by server 130, update the second ML model, and transmit the updated second ML model to devices 110 for a following training iteration. Operations associated with Steps 1 to 7 will be further described with reference to FIG. 6.

FIG. 6 illustrates signalling and operations for collaborative training of a machine learning model. Network node 150 may comprise access node 120 or server 130, or a combination of them. When network node 150 is a server, it may be configured to transmit and receive data to/from devices 110 via one or more access nodes 120, 122, 124. Devices 110 may be therefore optionally located at different cells.

At operation 601, network node 150 may initialize the second ML model, also referred to as the common ML model. The second ML model may be therefore common to devices 110. Each device 110-1, 110-2, 110-3 may however store and maintain respective instances of the second ML model, or at least a portion thereof. Also, network node 150 may store and maintain respective instances of the second ML model corresponding to devices 110-1, 110-2, 110-3, as illustrated in FIG. 5. Network node 150 may initialize the second ML model for example by randomly selecting parameters of a desired ML model architecture.

At operation 602, network node 150 may transmit the second ML model to devices 110, in this example device 110-1 and device 110-2. Note that network node 150 may have earlier transmitted the first ML model to devices 110, as described above.

At operation 603, network node 150 may receive, from device 110-1, channel state information (CSI) of device 110-1. The CSI may comprise for example current SINR value of device 110-1 or a CQI value of device 110-1.

At operation 604, network node 150 may receive CSI of device 110-2 , from device 110-2. This CSI may comprise for example current SINR value of device 110-2 or a CQI value of device 110-2. In general, network node 150 may receive CSI from devices 110, for example each of device 110. The CSI of each of devices 110 may indicate the state of the radio channel between access node 120 and a respective device 110-1, 110-2, 110-3.

At operation 605, network node 150 may share the received CSI with devices 110. For example, network node 150 may transmit CSI of devices 110, e.g., all devices potentially participating in the collaborative training, to device 110-1 and 110-2. Device 110-1 is therefore informed about CSI of other devices (e.g., device 110-2). Similarly, device 110-2 is informed about CSI of other devices (e.g., device 110-1). This enables CSI of other devices to be taken into account when devices 110 select their training modes.

At operation 606, device 110-1 may select a training mode for training the second ML model. For example, device 110-1 may execute the first ML model, providing as inputs to the first ML model the CSI of devices 110 received at operation 605 and an estimate of energy consumption of device 110-1 for training the second ML model.

Device 110-1 may be configured to determine the estimate of energy consumption training the second ML model by device 110-1 based one or more of the following energy-related parameters:

- a number of parameters (e.g., weights or biases) of the second ML model
- a number of computational operations for forward propagation and/or backpropagation of the second ML model, or
- a number of time-frequency transmission resources for transmitting the training output data to the network node and/or receiving the gradients from the network node.

Device 110-1 may use its own previous energy consumption value $E_{t-1}$ at every communication round $t$. A communication round may be initiated by from transmitting the cut-layer output and comprise receiving the gradients from network node 150, transmitting the local gradients to network node 150, and receiving the updated second ML model from network node 150. With reference to FIG. 6, a communication round may comprise operations 611 to 622. From point of view of devices 110-1, 110-2, a communication round may comprise operations performed by the respective device between (and including) operations 611 and 622. The estimate of the energy consumption of device 110-1 may be calculated for example as $E = E^m + E^c + E^t$. For example, the energy consumption associated with memory access may be calculated based on the number of model parameters and a predefined estimate of a single memory access operation, for example based on the following:

$$E^m = 2 \times \sum_{i=1}^{L} \mathrm{T_i} \times e_m \, ,$$

where $\mathrm{T_i}$ is the number of neural network parameters (e.g., weights and/or biases) at layer i, and $e_m$ is the required energy to fetch/decode one element from the memory.

The energy consumption associated with processing the ML model (e.g., forward propagation and backpropagation) may be determined based on the number of computational operations, which may be estimated based on batch size (number of input data samples of one batch), a capacity coefficient of device 110-1 associated with processing the input data samples, the number of operations for processing one input data sample, and/or the number of operations per processing cycle. For example, calculation of the energy consumption for processing the ML model may be based the following equation:

$$E^c = 2 \times \zeta_n \kappa \, f_n(t)^2 \frac{\sum_{i=1}^{l} \mathrm{C_i}}{\delta_n} \, ,$$

where $\zeta_n$ is the batch size for worker 'n', $\kappa$ is the effective capacitance coefficient of CPU. $\mathrm{C_i}$ is the number of required FLOPs to process one data sample at layer 'i', and $\delta_n$ is the number of FLOPs per CPU cycle.

The energy consumption of device 110-1 associated with transmission/reception of data (e.g., transmission of the output of the cut-layer and/or reception of respective gradients) may be estimated based on the transmit energy of device 110-1 and the transmission time, which may be dependent on the amount of the training output data of the cut-layer and the gradients. The transmission time may be further dependent on the available data transmission capacity (e.g.,

available time-frequency transmission resources such as subcarriers). For example, the energy consumption of device 110-1 associated with transmission/reception of data may be calculated based on the following equation:

$$E^t = P_n \times \tau_n(t) \,,$$

where $P_n$ is the transmission power for device n, in this example device 110-1, and $\tau_n(t)$ is the transmission time required by device $n$ at communication round $t$ for cut-layer i, which may be calculated for example as follows:

$$\tau_n(t) = \begin{cases} \dfrac{\zeta_n \, O_l + G_l}{\sum_{i \in I_n(t)} \left( B \log \left( 1 + \dfrac{p_s}{p_i + p_n} \right) \right)}, & if \ l \le L \\ 0 & , \ \ otherwise \end{cases}$$

where $O_l$ is the size in bits of the output of layer $l$ for one data sample, and $G_l$ is the size in bits of the gradient elements up layer $l$. $I_n(t)$ is the number of subcarriers allocated to device $n$ at communication round $t$ and $B$ is the total number of available subcarriers. Parameters $p_s$, $p_i$, and $p_n$ are the effective power of the signal comprising the data, the effective power of the interference, and the effective power of the noise, respectively.

In the example of FIG. 6, device 110-1 selects, based on execution of the first ML model, the split-federated learning mode with cut-layer index $i$. This mode may be also referred to as SL$^i$ mode.

At operation 607, device 110-2 may perform selectin of the training mode similar to device 110-1. Device 110-2 may however estimate its own energy consumption and provide it as input to the first ML model. In the example of FIG. 6, device 110-2 selects the federated learning (FL) mode.

At operation 608, device 110-1 may transmit, to network node 150, an indication of the training mode selected by device 110-1 for training the second ML model. For example, device 110-1 may transmit an indication of the cut-layer index. Any positive integer (e.g., 1, 2, 3...) may be configured to indicate the SL mode, with the value of the positive integer indicating the index of the cut-layer.

At operation 609, device 110-2 may transmit, to network node 150, an indication of the training mode selected by device 110-2 for training the second ML model. For example, device 110-2 may transmit an indication of the federated learning mode, which may be provided for example by a negative value of the cut-layer index such as -1. Any suitable negative integer (e.g., -1, - 2, -3...) may be configured to indicate the FL mode, with the value of the negative integer having no relevance to the index of the cut-layer, which may always be the final layer of the second ML model in case of the FL mode.

It is also possible that device 110-1 or 110-2 indicates that it does not participate in the collaborative training (cf. idle mode). This training mode may be indicated for example by setting the cut-layer index to zero. It is however understood that any non-positive values (e.g., 0, -1, - 2, -3...) may be allocated for indicating the FL mode or the idle mode. The idle mode and the respective indication provide the benefit of enabling a device with high estimated energy consumption to refrain from participating in the collaborative training of the second ML model. For example, device 110-1 might determine to refrain from participating in the collaborative training of the second ML model, in response to determining that the estimated energy consumption is above the threshold.

At operation 610, device 110-1, having selected the SL$^i$ mode, may initiate iterative training of the second ML model, in particular the respective instance of the second ML model possessed by device 110-1. Device 110-1 may perform forward propagation of training data through the second ML model until the cut-layer (layer i). The output of the cut-layer may be referred to as training output data.

At operation 611, device 110-1 may transmit the training output data (cut-layer output) to network node 150. The training output data may be dependent on the training mode selected by device 110-1, for example because the cut-layer selected for providing the output data may be different depending on the training mode. For example, values and/or dimension(s) of the training output data may be different depending on the index of the cut-layer.

At operation 612, network node 150 may continue the forward propagation through the second ML model, in particular with a respective instance of the second ML model possessed by network node 150. Network node may start the backpropagation from the layer next (subsequent) to the cut-layer. With reference to the example of FIG. 5, for device 110-1 the cut-layer may be the third layer (cf., mode SL$^3$) and the layer next to the cut-layer may be the fourth layer. For device 110-3 the cut-layer may be the fourth layer (cf., mode SL$^4$) and the layer next to the cut-layer may be the fifth layer. The next layer may be therefore a layer having an index incremented by one, when compared to the cut-layer.

In general, network node 150 may possess respective instances of the second ML model for each of devices 110. Network node 150 may therefore forward propagate the training output data received from any of devices 110 that have selected the SL mode through respective instances of the second model starting from layers next to respective cut-layers of these devices. This provides the benefit of enabling co-operation of devices 110 in training of the second ML model, while reducing total energy consumption for training the second ML model.

Network node 150 may further determine gradients for updating the second ML model, for example based on a loss function configured for training the second ML model for a machine learning task, such as for example speech processing, image classification, anomaly detection, frequency spectrum control, channel estimation, signal detection, beamforming, channel encoding, channel decoding, time-frequency transmission resource control, or multiple access control.

At operation 613, network node 150 may backpropagate the gradients through the second ML model, in particular the respective instance of the second ML model associated with device 110-1, until the layer next to the cut-layer of device 110-1. In general, network node 150 may determine and backpropagate the gradients with any instances of the second ML model associated with devices that have selected the SL mode. Network node 150 may therefore determine gradients for updating respective instances of the second ML model and backpropagate the gradients until the layers next to respective cut-layers of these devices. During the backpropagation, network node 150 may store the gradients of each of the backpropagated layers of the respective instances of the second ML model, in order to perform a common update for the second ML model at operations 620 and 621.

At operation 614, network node 150 may transmit the gradients of the layer next to the cut-layer to device 110-1. In general, network node 150 may transmit gradients of the layers next to the cut-layers of devices 110 to devices 110, or any of them operating in the SL mode.

At operation 615, device 110-1 may backpropagate the gradients received at operation 614 through the second ML model starting from the cut-layer. Device 110-1 may backpropagate the gradients from the cut-layer to the first layer of the respective instance of the second ML model. During the backpropagation, device 110-1 may store the gradients of each of the backpropagated layers of the respective instance of the second ML model. The gradients determined by device 110-1 may be referred to as local gradients.

At operation 616, device 110-1 may transmit the local gradients to network node 150. As described above, the local gradients may comprise gradients for the backpropagated layers, that is, the layers up to the cut-layer of device 110-1. It is noted that even though device 110-1 is the only device operating in the SL mode in example of FIG. 6, multiple devices might select the SL mode with respective, possibly different, cut-layer indices. Operations associated with device 110-1 might be therefore performed in parallel by/for multiple devices. It is further noted that one or more devices might select the FL mode. Operations associated with such devices (e.g., following operations 617, 618, 619) may be performed in parallel with operations associated with devices operating in the SL mode.

At operation 617, device 110-2, having selected the FL mode, may initiate iterative training of the second ML model. Device 110-2 may use a respective instance of the second ML model possessed by device 110-2 for performing its part in the training process. Device 110-2 may perform forward propagation of training data through the second ML model until the cut-layer, which in case of the FL mode is the final layer of the second ML model. Device 110-2 may further determine gradients for updating the second ML model, for example based on the loss function configured for training the second ML model for the machine learning task. Device 110-1 may receive an indication or a configuration of the loss function from network node 150.

At operation 618, device 110-2 may backpropagate the gradients determined by itself through the second ML model, starting from the final layer and proceeding until the first layer. During the backpropagation, device 110-2 may store the gradients of each of the backpropagated layers. These gradients may be referred to as local gradients of device 110-2.

At operation 619, device 110-2 may transmit the local gradients to network node 150. As described above, the local gradients may comprise gradients for the backpropagated layers, in this case all layers of the second ML model.

At operation 620, network node 150 may aggregate the gradients received from devices 110-1 and 110-2, and any other devices participating in the collaborative training. Aggregation of gradients may comprise any suitable method for combining the gradients of respective instances of the second ML model, for example averaging them. Note that in case of SL mode part of the gradients (up to the cut-layer) are determined by devices 110 and the rest of them are determined by network node 150. In case of FL mode, all gradients are determined by a device.

At operation 621, network node 150 may update the second ML model based on the aggregated gradients. Note that network node may maintain a separate master instance of the second ML model, in addition to the instances used for training with different devices in parallel. Alternatively, such as master instance of the second ML model could be used for sequential forward/backpropagation and collection of gradients for different devices. In any case, network mode 150 may be configured to determine and aggregate the gradients before updating the second ML model.

At operation 622, network node 150 may transmit the updated second ML model to devices 110-1, 110-2, and any other devices participating in the collaborative training. Upon reception of the updated second ML model, devices 110-1 and 110-2 may replace their instance of the second ML model with the updated second ML model. Note that devices 110 may be configured to store and maintain a portion of the second ML model, for example from the first layer up to the respective cut-layer. Layers subsequent to the cut-layer may be discarded.

Operations 610 to 622 may be iterated, for example such that after delivering the updated second ML model to devices 110 a new training iteration may be initiated by returning to operations 610 and 617. Network node 150 may be therefore configured to perform iterative training of the second ML model, where iterations, e.g., each iteration, comprises receiving, from devices 110, training output data of the second ML model which is dependent on training modes selected by devices 110, updating the second ML model based on the training output data devices (e.g., based on aggregated gradients obtained by receiving part of the gradients from devices 110 and local forward/backpropagation by network node 150 considering the cut-layer selected by each device), and transmitting the updated second ML model devices 110.

A device, for example device 110-1 or 110-2, may be configured to perform the iterative training mode based on the training mode selected by the device. For example, at different iterations of the training, the device may be configured to transmit training output data of the second ML model to network node 150 and to receive an updated version of the second ML model from network node 150. Again, the training output data may be dependent on the training mode, e.g., due to the training mode dependent cut-layer. At each iteration, the device may be further configured to perform forward propagation of training data up to the cut-layer, transmit training output data of the cut-layer to network node 150, receive gradients from network node 150, backpropagate the gradients starting from the cut-layer, and transmit gradients of the backpropagated layers to network node 150.

Network node 150 may determine to terminate the collaborative training, for example in response to determining that the loss reaches a threshold or after a preconfigured number of training iterations. Network node 150 may transmit an indication of the completion of the collaborative training to devices 110. Note that network node 150 may be configured to transmit the updated second ML model (cf., operation 622) also to devices not participating in the training, for example to devices that have indicated to have selected the idle mode.

Any of devices 110 or network node 150 may be configured to perform the machine learning task by the updated second ML model. As noted above, the trained ML model may be used for performing various machine learning tasks, such as for example speech processing, image classification, anomaly detection, frequency spectrum control, channel estimation, signal detection, beamforming, channel encoding, channel decoding, time-frequency transmission resource control, or multiple access control.

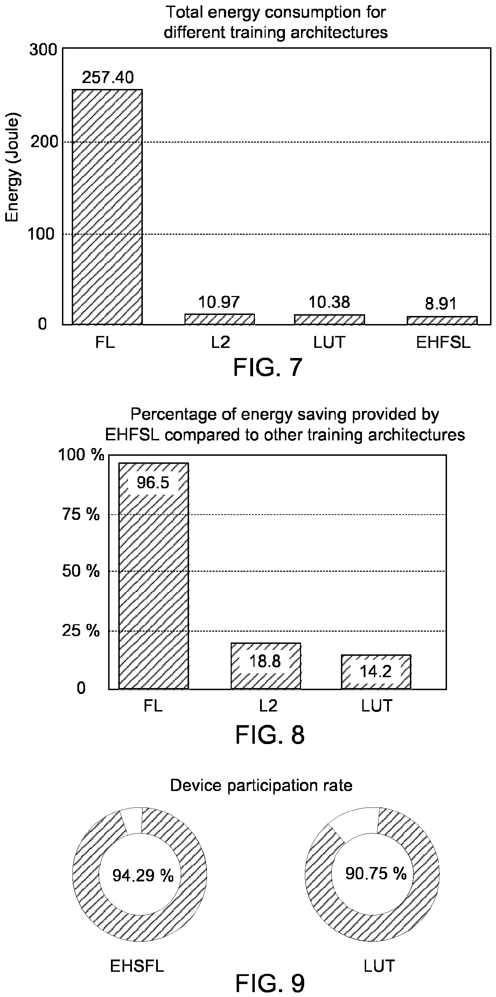

FIG. 7, FIG. 8, and FIG. 9 provide simulation results for the example embodiments of the present disclosure, named EHSFL, compared to following reference methods:

- Look-up table (LUT) based implementation: In this case, each device has access to its own SINR value only, and based on that, the device selects the mode that minimizes its local total energy consumption.
- Layer 2 (L2): In this case, all devices select the same cut-layer (index two) for the whole duration of the training. Cut-layer index two resulted in the best performance among other cut-layer indices, when applied by all devices throughout the training.
- Federated learning (FL): In this case, all devices process the whole second ML model locally, following the FL approach described above with reference to device 110-2. The presented results capture the performance of all these algorithms until the test accuracy of a classification task reaches the target of 97%.

FIG. 7 illustrates an example of total energy consumption for different training architectures. It is observed that EHSFL provides the lowest energy consumption compared to the reference methods. The results of algorithm L2 validate the drawback of an architecture with fixed cut-layer selection, since the changes in the wireless radio environment affect the SINR and therefore also the total energy consumption.

FIG. 8 illustrates examples of relative energy savings provided by EHFSL. This figure shows the percentage of energy savings that EHSFL provides compared to the reference methods. In comparison to the LUT-based method, which represents a channel-aware non-collaborative case, it is observed that EHFSL provides energy saving of more than 14%. This indicates that devices sharing the same radio environment can provide better performance when collaborating to solve a specific task. In comparison to the FL-based method, EHFSL provides energy saving of more than 96% to reach the target test accuracy. In comparison to L2, EHSFL provides energy saving of more than 18%.

FIG. 9 illustrates an example of device participation rates for different training architectures. This figure shows the percentage of participation of devices in the learning process for both EHSFL and LUT algorithms. It is observed that EHFSL enables more devices to participate in the learning process. This is enabled by providing more information per iteration (cf., local gradients from participating devices) to network node 150. The increased number of participants reduces the number of needed training iterations and therefore makes the training converge faster to the target accuracy. The overall energy consumption of the devices is therefore reduced.

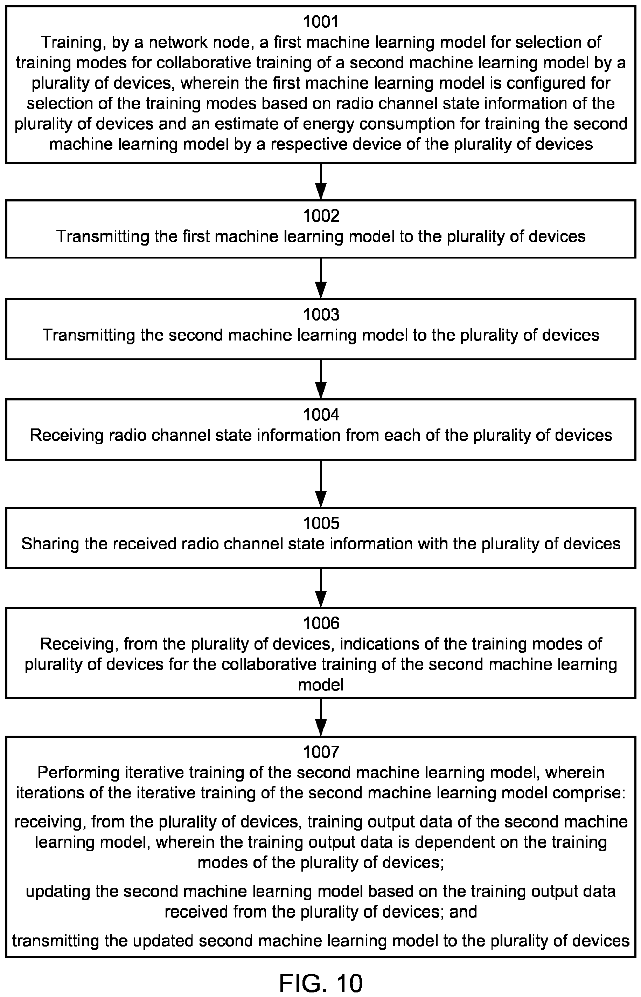

FIG. 10 illustrates an example of a method for collaborative training a machine learning model. The method may be performed, for example, by network node 150 such as access node 120, server 130, or a system comprising access node 120 and server 130, or by a control apparatus configured to control the functioning thereof, when installed therein.

At operation 1001, the method may comprise training, by a network node, a first machine learning model for selection of training modes for collaborative training of a second machine learning model by a plurality of devices, wherein the first machine learning model is configured for selection of the training modes based on radio channel state information of the plurality of devices and an estimate of energy consumption for training the second machine learning model by a respective device of the plurality of devices.

At operation 1002, the method may comprise transmitting the first machine learning model to the plurality of devices.

At operation 1003, the method may comprise transmitting the second machine learning model to the plurality of devices.

At operation 1004, the method may comprise receiving radio channel state information from each of the plurality of devices.

At operation 1005, the method may comprise sharing the received radio channel state information with the plurality of devices.

At operation 1006, the method may comprise receiving, from the plurality of devices, indications of the training modes of plurality of devices for the collaborative training of the second machine learning model.

At operation 1007, the method may comprise: performing iterative training of the second machine learning model, wherein iterations of the iterative training of the second machine learning model comprise: receiving, from the plurality of devices, training output data of the second machine learning model, wherein the training output data is dependent on the training modes of the plurality of devices; updating the second machine learning model based on the training output data received from the plurality of devices; and transmitting the updated second machine learning model to the plurality of devices.

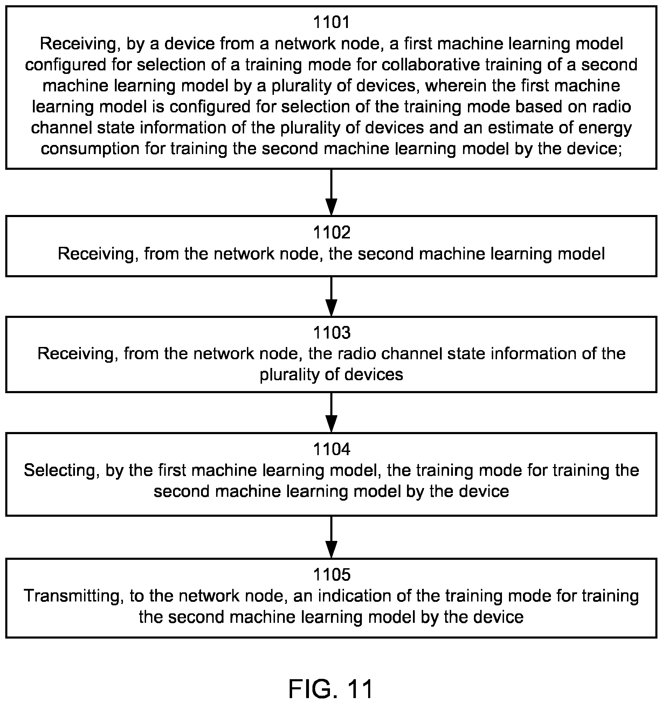

FIG. 11 illustrates an example of another method for collaborative training of a machine learning model. The method may be performed, for example, by any of devices 110, or by a control apparatus configured to control the functioning thereof, when installed therein.

At operation 1101, the method may comprise: receiving, by a device from a network node, a first machine learning model configured for selection of a training mode for collaborative training of a second machine learning model by a plurality of devices, wherein the first machine learning model is configured for selection of the training mode based on radio channel state information of the plurality of devices and an estimate of energy consumption for training the second machine learning model by the device.

At operation 1102, the method may comprise receiving, from the network node, the second machine learning model.

At operation 1103, the method may comprise receiving, from the network node, the radio channel state information of the plurality of devices.

At operation 1104, the method may comprise selecting, by the first machine learning model, the training mode for training the second machine learning model by the device.

At operation 1105, the method may comprise transmitting, to the network node, an indication of the training mode for training the second machine learning model by the device.

Further features of the methods directly result for example from functionality of device(s) 110, access node(s) 120, 122, 124, or server 130, as described throughout the description, claims, and drawings, and are therefore not repeated here. An apparatus may be configured to perform or cause performance of any aspect of the method(s) described herein. Further, a computer program or a computer program product may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Expression "or" may be understood as a non-exclusive "or" and therefore a list or two or more elements indicated to be mutually optional by the expression "or" means at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. A method, comprising:

   training (1001), by a network node, a first machine learning model for selection of training modes for collaborative training of a second machine learning model by a plurality of devices, wherein the first machine learning model is trained to enable selection of the training modes based on inputs to the first machine learning model of radio channel state information of the plurality of devices and an estimate of energy consumption for training the second machine learning model by a respective device of the plurality of devices;
   transmitting (1002), by the network node, the first machine learning model to the plurality of devices;
   transmitting (1003), by the network node, the second machine learning model to the plurality of devices;
   receiving (1004), by the network node, radio channel state information from each of the plurality of devices;
   sharing (1005), by the network node, the received radio channel state information with the plurality of devices;
   receiving (1006), by the network node from the plurality of devices, indications of the training modes of plurality of devices for the collaborative training of the second machine learning model; and
   performing (1007), by the network node, iterative training of the second machine learning model, wherein iterations of the iterative training of the second machine learning model comprise:

      receiving (1007), by the network node from the plurality of devices, training output data of the second machine learning model, wherein the training output data is dependent on the training modes of the plurality of devices;
      updating (1007), by the network node, the second machine learning model based on the training output data received from the plurality of devices; and
      transmitting (1007), by the network node, the updated second machine learning model to the plurality of devices.

2. The method according to claim 1, wherein the training modes of the plurality of devices are indicative of respective cut-layers of the plurality of devices configured to provide the training output data of the second machine learning model.

3. The method according to claim 2, wherein the training modes of the plurality of devices comprise one or more of the following:

a split learning mode with an index of a cut-layer of the respective device,
a federated learning mode with the index of the cut-layer of the respective device corresponding to a final layer of the second machine learning model, or
an idle mode indicative of the respective device not participating in the collaborative training of the second machine learning model.

4. The method according to claim 3, wherein the first machine learning model comprises a multi-agent reinforcement learning (MARL) model.

5. The method according to claim 4, wherein the MARL model is trained to provide a reward when:

a training mode is the split learning mode or the federated learning mode, the training minimizes the estimate of energy consumption for training the second machine learning model by the respective device, and the estimate of the energy consumption for training the second machine learning model by the respective device is below a threshold; and
the training mode is indicative of the respective device not participating in the collaborative training of the second machine learning mode and the estimate of the energy consumption for training the second machine learning model by the respective device is above the threshold.

6. The method according to any of claims 1 to 5, wherein the iterations of the iterative training of the second machine learning model further comprise:

forward propagating, by the network node, the training output data received from the plurality of devices through respective instances of the second machine learning model starting from layers next to cut-layers of the plurality of devices;
determining, by the network node, gradients for updating the respective instances of the second machine learning model;
backpropagating, by the network node, the gradients until the layers next to the cut-layers of the plurality of devices; and
transmitting, by the network node, gradients of the layers next to the respective cut-layers to the plurality of devices.

7. A method, comprising:

receiving (1101), by a device from a network node, a first machine learning model configured for selection of a training mode for collaborative training of a second machine learning model by a plurality of devices, wherein the first machine learning model is trained to enable selection of the training mode based on radio channel state information of the plurality of devices and an estimate of energy consumption for training the second machine learning model by the device;
receiving (1102), by the device from the network node, the second machine learning model;
receiving (1103), by the device from the network node, the radio channel state information of the plurality of devices;
selecting (1104), by the first machine learning model received by the device, the training mode for training the second machine learning model by the device, wherein the device causes the first machine learning model to select the training mode by executing the first machine learning model providing as inputs to the first machine learning model the received radio channel state information of the plurality of devices and the estimate of energy consumption for training the second machine learning model by the device; and
transmitting (1105), by the device to the network node, an indication of the selected training mode for training the second machine learning model by the device.

8. The method according to claim 7, further comprising:
performing, by the device, iterative training of the second machine learning model using the training mode, wherein iterations of the iterative training of the second machine learning model comprise:

transmitting, by the device to the network node, training output data of the second machine learning model, wherein the training output data is dependent on the training mode; and

receiving, by the device from the network node, an updated second machine learning model.

9. The method according to claim 7 or 8, wherein the training mode is indicative of a cut-layer configured to provide the training output data of the second machine learning model.

10. The method according to any of claims 7 to 9, wherein the training mode comprises one of the following:

a split learning mode with an index of a cut-layer,
a federated learning mode with the index of the cut-layer corresponding to a final layer of the second machine learning model, or
an idle mode indicative of the device not participating in the collaborative training of the second machine learning model.

11. The method according to claim 10, wherein the first machine learning model comprises a multi-agent reinforcement learning (MARL) model.

12. The method according to any of claims 7 to 10, wherein the iterations of the iterative training of the second machine learning mode further comprise:

forward propagating, by the device, training data through the second machine learning model until a cut-layer to obtain the training output data;
receiving, by the device, gradients of a layer next to the cut-layer for updating the second machine learning model; and
backpropagating, by the device, the gradients through the second machine learning model starting from the cut-layer.

13. The method according to claim 12, further comprising:
determining the estimate of the energy consumption for training the second machine learning model by the device based on:

a number of parameters of the second machine learning model,
a number of computational operations for forward propagation and backpropagation of the second machine learning model, and
a number of time-frequency transmission resources for transmitting the training output data to the network node and receiving the gradients for updating the second machine learning model.

14. An apparatus comprising means for performing the method according to any of claims 1 to 13.

15. A computer program comprising instructions, which, when executed by an apparatus, cause the apparatus at least to performing the method according to any of claims 1 to 13.

FIG. 1

FIG. 2

**FIG. 3**

$$f\left(b + \sum_{k=0}^{n} a_k w_k\right)$$

**FIG. 4**

**FIG. 5**

FIG. 6

Total energy consumption for
different training architectures

**FIG. 7**

Percentage of energy saving provided by
EHFSL compared to other training architectures

**FIG. 8**

Device participation rate

EHSFL                    LUT

**FIG. 9**

**1001**
Training, by a network node, a first machine learning model for selection of training modes for collaborative training of a second machine learning model by a plurality of devices, wherein the first machine learning model is configured for selection of the training modes based on radio channel state information of the plurality of devices and an estimate of energy consumption for training the second machine learning model by a respective device of the plurality of devices

**1002**
Transmitting the first machine learning model to the plurality of devices

**1003**
Transmitting the second machine learning model to the plurality of devices

**1004**
Receiving radio channel state information from each of the plurality of devices

**1005**
Sharing the received radio channel state information with the plurality of devices

**1006**
Receiving, from the plurality of devices, indications of the training modes of plurality of devices for the collaborative training of the second machine learning model

**1007**
Performing iterative training of the second machine learning model, wherein iterations of the iterative training of the second machine learning model comprise:

receiving, from the plurality of devices, training output data of the second machine learning model, wherein the training output data is dependent on the training modes of the plurality of devices;

updating the second machine learning model based on the training output data received from the plurality of devices; and transmitting the updated second machine learning model to the plurality of devices

FIG. 10

1101
Receiving, by a device from a network node, a first machine learning model configured for selection of a training mode for collaborative training of a second machine learning model by a plurality of devices, wherein the first machine learning model is configured for selection of the training mode based on radio channel state information of the plurality of devices and an estimate of energy consumption for training the second machine learning model by the device;

1102
Receiving, from the network node, the second machine learning model

1103
Receiving, from the network node, the radio channel state information of the plurality of devices

1104
Selecting, by the first machine learning model, the training mode for training the second machine learning model by the device

1105
Transmitting, to the network node, an indication of the training mode for training the second machine learning model by the device

FIG. 11

## EUROPEAN SEARCH REPORT

**Application Number**

EP 25 15 5463

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAI QIAN ZHANG ET AL: "A Multi-agent Reinforcement Learning Approach for Efficient Client Selection in Federated Learning", ARXIV.ORG, CORNELL UNIVERSITY LIBRARY, 201 OLIN LIBRARY CORNELL UNIVERSITY ITHACA, NY 14853, 9 January 2022 (2022-01-09), XP091133116, * abstract; figure 4 * * page 4, column 1, line 9 - page 4, column 1, line 11 * * page 4, column 1, line 35 - page 4, column 2, line 5 * * page 4, column 2, line 6 - line 11 * * page 5, col. 1, last paragraph - page 5, col. 2, lines 3 * | 1-15 | INV. G06N3/098 G06N3/092 G06N3/084 G06N3/088 G06N3/09 |
| A | LIN ZHENG ET AL: "Efficient Parallel Split Learning Over Resource-Constrained Wireless Edge Networks", IEEE TRANSACTIONS ON MOBILE COMPUTING, IEEE SERVICE CENTER, LOS ALAMITOS, CA, US, vol. 23, no. 10, 25 January 2024 (2024-01-25), pages 9224-9239, XP011981453, ISSN: 1536-1233, DOI: 10.1109/TMC.2024.3359040 [retrieved on 2024-01-26] * the whole document * | 1-15 | **TECHNICAL FIELDS SEARCHED (IPC)** G06N |
| A | Lee Joohyung ET AL: "Exploring the Privacy-Energy Consumption Tradeoff for Split Federated Learning", , 5 January 2024 (2024-01-05), pages 1-7, XP093292993, Retrieved from the Internet: URL:https://arxiv.org/pdf/2311.09441v2 * the whole document * | 1-15 | |

The present search report has been drawn up for all claims

| Place of search | Date of completion of the search | Examiner |
|---|---|---|
| The Hague | 9 July 2025 | Aoun, Marc |